# EUROPÄISCHE PATENTSCHRIFT

(11) **EP 1 779 206 B1**
(45) Veröffentlichungstag und Bekanntmachung des Hinweises auf die Patenterteilung: **07.01.2009**
(21) Anmeldenummer: 05777995.1
(22) Anmeldetag: 15.08.2005
(51) Int. Cl.: G05B 19/042, G05B 19/05

(54) **PERIPHERIEEINHEIT FÜR EIN AUTOMATISIERUNGSGERÄT**
PERIPHERY UNIT FOR AN AUTOMATIC DEVICE
UNITE PERIPHERIQUE POUR APPAREIL D'AUTOMATISATION

(30) Priorität: 16.08.2004 DE 102004039698
(43) Veröffentlichungstag der Anmeldung: 02.05.2007
(73) Patentinhaber: SIEMENS AKTIENGESELLSCHAFT, 80333 München (DE)
(72) Erfinder: KREB, Walter, 76848 Schwanheim (DE); LEHMANN, Ulrich, 76744 Wörth (DE); SCHWAB, Robert, 76187 Karlsruhe (DE)
(86) Internationale Anmeldenummer: PCT/EP2005/054001
(87) Internationale Veröffentlichungsnummer: WO 2006/018426

(56) Entgegenhaltungen:
- DE-A1- 4 415 541
- US-A- 4 752 886
- US-A- 4 870 564

## Beschreibung

Die Erfindung betrifft eine Peripherieeinheit für ein Automatisierungsgerät. Darüber hinaus betrifft die Erfindung ein redundantes Automatisierungsgerät, in welchem derartige Peripherieeinheiten einsetzbar sind.

In der Automatisierungstechnik werden gewöhnlich Daten zwischen einer Peripherieeinheit eines Automatisierungsgerätes und einem Sensor, z. B. einem Sensor für eine Temperatur-oder Druckmessung, oder einem Aktor, z. B. einem Aktor in Form eines Stellungsreglers für Regelventile, über analoge Stromsignale im Bereich von 0 - 20 mA bzw. 4 - 20 mA ausgetauscht. Dazu weist das Automatisierungsgerät Peripherieeinheiten auf, welche mit einer vorgegebenen Anzahl von Analogeingängen und Analogausgängen versehen sind, wobei die Peripherieeinheiten entsprechende intern festgelegte Hardware-Eigenschaften aufweisen, um als Analogeingabe- oder Analogausgabe-Einheit eingesetzt werden zu können. Derartige Peripherieeinheiten, welche auch in redundanten Automatisierungsgeräten einsetzbar sind, sind aus dem Siemens-Katalog ST 70, Kapitel 1 und 5, Ausgabe 2003 bekannt.
Redundante Automatisierungsgeräte, z. B. die aus diesem Katalog bekannten Automatisierungsgeräte SIMATIC S7-400H, werden in den Bereichen der Automatisierungstechnik eingesetzt, in denen erhöhte Anforderungen an die Verfügbarkeit und damit an die Ausfallsicherheit des Automatisierungssystems gestellt werden. Es sind Bereiche, in denen ein Anlagenstillstand sehr hohe Kosten verursachen würde. Hier können nur redundante Systeme den Anforderungen an die Verfügbarkeit gerecht werden. Die hochverfügbare SIMATIC S7-400H arbeitet auch dann weiter, wenn durch einen oder mehrere Fehler Teile der Steuerung ausgefallen sind. Sie besitzt redundant ausgelegte zentrale Funktionen und ist mit zwei getrennten Zentralgeräten als Steuerrechner aufgebaut. Die beiden Steuerrechner arbeiten zyklisch und synchron die gleichen Verarbeitungsprogramme ab. Sie überwachen sich gegenseitig und legen selbständig fest, welcher Steuerrechner aktiv ist, d. h. tatsächlich über seine Ausgabedaten den Prozess steuert. Hierzu werden Daten über eine Redundanzkopplung zwischen den beiden Steuerrechnern ausgetauscht. Redundant ausgebildete dezentrale Peripherieeinheiten, in welche je nach Einsatzfall digitale Ein-/Ausgabebaugruppen gesteckt sind, sind jeweils mit einem Feldbus an die einen Steuerrechner angeschlossen. Mit Hilfe von Messumformern oder -gebern gewonnene Prozesseingangsinformationen werden durch die Peripherieeinheit an beide Steuerrechner weitergeleitet. Beim so genannten "Hot Stand By"-Betrieb arbeiten die beiden Steuerrechner im ungestörten Fall gleichzeitig dasselbe Steuerprogramm ab; es ist jedoch nur ein Steuerrechner aktiv, d. h., nur die Ausgabedaten eines Steuerrechners werden zur Steuerung des Prozesses weiterverarbeitet. Im Fehlerfall übernimmt das intakte Gerät allein die Steuerung des Prozesses. Dazu erhalten die Geräte automatisch das gleiche Anwenderprogramm, die gleichen Datenbausteine, die gleichen Prozessabbildinhalte sowie die gleichen internen Daten, wie z. B. Zeiten, Zähler, Merker usw. Dadurch sind beide Geräte immer auf dem aktuellen Stand und können im Fehlerfall jederzeit die Steuerung alleine weiterführen. Prozessausgabedaten, durch welche die an die Stellglieder von der Peripherieeinheit auszugebenden Signale vorgegeben werden, werden der Peripherieeinheit im ungestörten Fall über beide Feldbusse angeboten, sie wertet jedoch nur die von einem der Feldbusse empfangenen Steuerdaten aus. Der jeweils angeschlossene Steuerrechner kann somit als der aktive Steuerrechner bezeichnet werden.

US 4,870,564 beschreibt ein Ein-/Ausgabesystem, welches sowohl als eine digitale Eingabe- als auch als eine digitale Ausgabeeinheit eingesetzt werden kann.

Aus der DE 44 15 541 A1 ist eine fehlertolerante programmierbare Steuerung mit Ausgabeeinheiten bekannt, wobei jede Einheit, die mit der gleichen Seite einer Last verbunden ist, an eine andere Betriebsleistungsquelle angeschlossen ist.

US 4,752,886 A1 offenbart eine Peripherieeinheit mit Mitteln, welche zur Ansteuerung eines Aktors geeignet sind.

Der Erfindung liegt die Aufgabe zugrunde, eine Peripherieeinheit der eingangs genannten Art zu schaffen, welche sowohl als Analogeingabe als auch als Analogausgabe betreibbar ist, wobei aus einer vorgegebenen Anzahl von Anschlüssen der Peripherieeinheit die Anzahl der Anschlüsse, welche als Eingänge, und die Anzahl der Anschlüsse, welche als Ausgänge genutzt werden sollen, flexibel an die jeweilige Applikation anpassbar sind. Darüber hinaus ist ein redundantes Automatisierungsgerät anzugeben, in welchem derartige Peripherieeinheiten einsetzbar sind.

Im Hinblick auf die Peripherieeinheit wird diese Aufgabe durch die im Anspruch 1 angegebenen, im Hinblick auf das redundante Automatisierungsgerät durch die im Anspruch 4 angegebenen Maßnahmen gelöst.

Vorteilhaft ist, dass die Anschlüsse der Peripherieeinheit sowohl für die Analogeingabe (Einlesen von Sensorsignalen) als auch für die Analogausgabe (Ausgeben von Aktorsignalen) anpassbar sind. Die Peripherieeinheit ist insbesondere für eine HART-Kommunikation zwischen der Peripherieeinheit und dem Aktor bzw. Sensor geeignet. Während dieser Kommunikation übermittelt die Steuereinheit dem Digital-Analog-Wandler während der Ausgabe ein HART-Signal, welches ein digitales Kommunikationssignal und ein auszugebendes digitales Prozess-Ausgangssignal umfasst und aus welchem der Digital-Analog-Wandler ein Analogsignal erzeugt. Dieses Analogsignal umfasst ein analoges Prozesssignal und ein analoges, zwei Frequenzen (1200 Hz, 2200 Hz) umfassendes Kommunikationssignal.

Während der Eingabe übermittelt der Analog-Digital-Wandler der Steuereinheit ein Digitalsignal, aus welchem die Steuereinheit die den beiden Frequenzen entsprechenden Bitinformationen 0 und 1 und die digitalen Prozesswerte filtert. Sowohl im redundanten als auch im nichtredundanten Betrieb ist für die Analogeingabe der Bürdenwiderstand konstant. Im nichtredundanten Betrieb wird der Bürdenwiderstand durch in Serie geschaltete Messwiderstände von zwei Messkreisen der Peripherieeinheit gebildet. Im redundanten Betrieb ist ein Messkreis einer Peripherieeinheit mit einem Messkreis einer anderen Peripherieeinheit in Serie geschaltet.

In einer Ausgestaltung der Erfindung ist die erste und zweite Einstellung der Steuereinheit durch einen Anwender menügesteuert einstellbar, wodurch der Anwender die Anschlüsse der Peripherieeinheit entsprechend seiner Applikation als Eingänge oder Ausgänge vorsehen kann. Es ist z. B. möglich, zehn Anschlüsse einer sechzehn Anschlüsse umfassenden Peripherieeinheit als Eingänge zum Anschluss von Messumformern und acht Anschlüsse als Ausgänge zum Anschluss von Aktoren zu betreiben. In diesem Fall werden die an den zehn Eingangs-Anschlüssen angeschlossenen Messumformer mit einer konstanten Spannung beaufschlagt, über die acht Ausgangs-Anschlüsse wird den angeschlossenen Aktoren ein einem auszugebenden Prozesssignal entsprechender Strom zugeführt.

In einer weiteren Ausgestaltung der Erfindung ist vorgesehen, dass in der zweiten Einstellung dem Analog-Digital-Wandler der dem auszugebenden Prozess-Ausgangssignal entsprechende Wert zurückgeführt wird. Dadurch ist eine Unterbrechung einer Leitung, über welche ein Aktor an einen Ausgabe-Anschluss der Peripherieeinheit angeschlossen ist, detektierbar. Sowohl im redundanten als auch im nichtredundanten Betrieb ist für die Analogeingabe der Bürdenwiderstand konstant. Im nichtredundanten Betrieb wird der Bürdenwiderstand durch in Serie geschaltete Messwiderstände von zwei Messkreisen der Peripherieeinheit gebildet. Im redundanten Betrieb ist ein Messkreis einer Peripherieeinheit mit einem Messkreis einer anderen Peripherieeinheit in Serie geschaltet.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 2: Blockschaltbilder von nichtredundant geschalteten Peripherieeinheiten,
- Figuren 3 und 4: Blockschaltbilder von redundant geschalteten Peripherieeinheiten und
- Figur 5: ein redundantes Automatisierungssystem.

Die in den Figuren dargestellten gleichen Teile sind mit gleichen Bezugszeichen versehen.

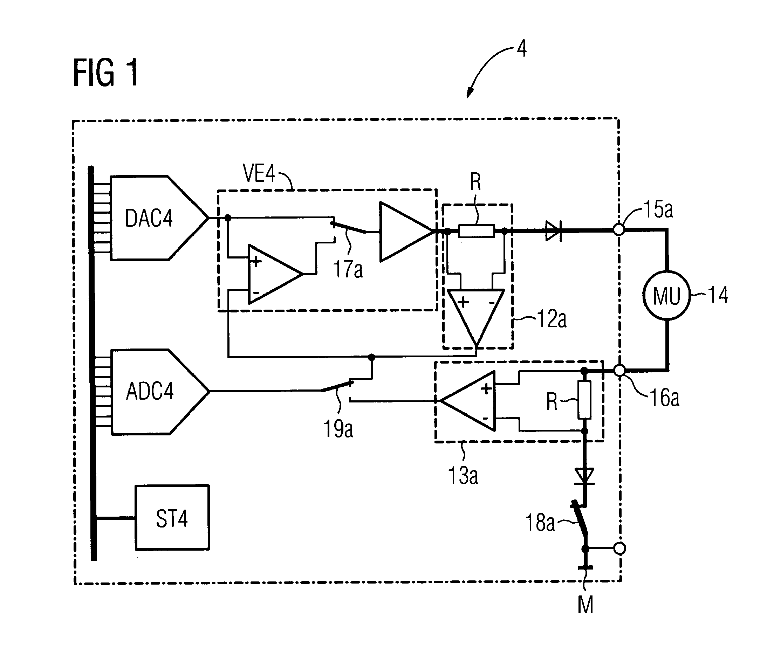

In Figur 1 ist mit DAC4 ein Digital-Analog-Wandler einer nichtredundant geschalteten Peripherieeinheit 4 bezeichnet, welcher über einen Bus mit einer Steuereinheit ST4 und einem Analog-Digital-Wandler ADC4 verbunden ist. Über eine hier nicht dargestellte Steuerleitung schaltet die Steuereinheit ST4 einen ersten Schalter 17a derart, dass eine Versorgungseinheit VE4 in eine erste und eine zweite Einstellung schaltbar ist. Im dargestellten Beispiel ist der erste Schalter 17a in einer Schalterstellung, wodurch ein an Anschlüssen 15a, 16a der Peripherieeinheit 4 angeschlossener Messumformer 14 mit einer konstanten Spannung beaufschlagt wird. Diese Spannung erzeugt die Versorgungseinheit VE4 aus einer Ausgangsgröße des Digital-Analog-Wandlers DAC4, die der Digital-Analog-Wandler DAC4 aus einem durch die Steuereinheit ST4 zugeführten Wert bildet. In dieser Einstellung ist der Anschluss 15a der Peripherieeinheit 4 als Analogeingabe-Anschluss (Einlesen eines Messumformer-Signals) belegt. Aufgrund einer zu messenden Prozessgröße (z. B. einer Temperatur) durch den Messumformer 14 und der vorgegebenen konstanten Spannung fließt ein Messstrom über einen ersten und einen zweiten Messkreis 12a, 13a, einen durch die Steuereinheit ST4 steuerbaren zweiten Schalter 18a zu einem Massepotential M (der Stromfluss ist durch eine dick gezeichnete Linie dargestellt). Die Messkreise 12a, 13a weisen jeweils einen Messwiderstand R auf, wobei der Widerstandswert des Messwiderstands gleich dem halben Bürdenwiderstand ist. Die Messkreise 12a, 13a erfassen den Messstrom, wobei entsprechend der Schalterstellung eines Schalters 19a der durch den Messkreis 12a oder der durch den Messkreis 13a erfasste Messstrom dem Analog-Digital-Wandler ADC4 zugeführt wird, welcher der Steuereinheit ST4 einen diesem Messstrom entsprechenden Prozesswert übermittelt. Im dargestellten Beispiel wird der durch den Messkreis 12a erfasste Messstrom dem Analog-Digital-Wandler ADC4 übermittelt.

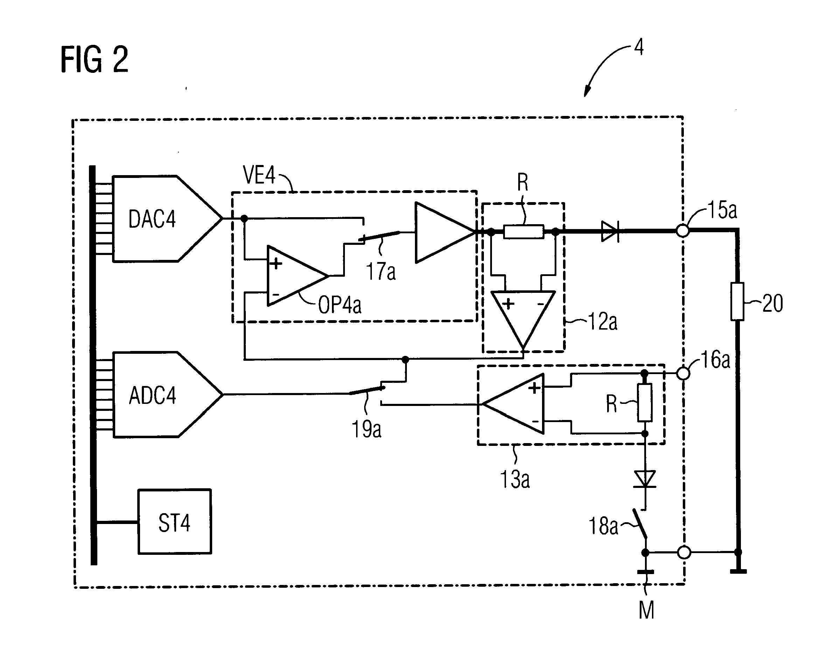

Im Folgenden wird auf Figur 2 verwiesen. Dort ist die Peripherieeinheit 4 als Analogausgabe eingestellt, wobei am Anschluss 15a ein Aktor 20 angeschlossen ist. Die Umstellung von Analogeingabe auf Analogausgabe bzw. von Analogausgabe auf Analogeingabe erfolgt vorzugsweise menügesteuert im Rahmen einer Projektierung und Parametrierung mit Hilfe eines an sich bekannten Engineering-Systems, z. B. eines aus dem Siemens-Katalog PCS 7, Kapitel 4, Ausgabe 2004 bekannten Engineering-Systems. Dazu wird einem Anwender ein entsprechendes Menü auf einer an den Bus angeschlossenen Anzeigeeinheit bereitgestellt, das die Anschlüsse der Peripherieeinheit zeigt. Die Anschlüsse können z. B. mit unterschiedlichen Farben gekennzeichnet werden, wobei Anschlüsse für Analogeingaben mit einer ersten und Anschlüsse für Analogausgaben mit einer zweiten Farbe markierbar sind. Entsprechend der Markierung stellt die Steuereinheit ST4 die Anschlüsse ein. Nach der Vorgabe des Anschlusses 15a als Analogausgabe bringt die Steuereinheit ST4 den Schalter 17a der Versorgungseinheit VE4 in eine Schaltstellung, in der dem Aktor 20 ein einem Prozess-Ausgangssignal entsprechender Strom übermittelt wird. Aus dem Prozess-Ausgangssignal der Steuereinheit ST4 erzeugt der Digital-Analog-Wandler DAC4 zunächst einen analogen Wert, aus dem die Versorgungseinheit VE4 einen Strom ableitet. Dieser Strom wird über den ersten Messkreis 12a erfasst und über einen Operationsverstärker OP4a der Versorgungseinheit VE4 auf einem konstanten Wert gehalten. Ferner wird dieser Strom über den Schalter 19a dem Analog-Digital-Wandler ADC4 zugeführt, der einen diesem Strom entsprechenden Digitalwert der Steuereinheit ST4 übermittelt. Durch diese Rückführung kann die Steuereinheit ST4 eine Unterbrechung der Leitung, über die der Aktor 20 an den Anschluss 15a angeschlossen ist, erkennen.

Im Folgenden wird auf einen redundanten Einsatz der Peripherieeinheit 4 näher eingegangen.

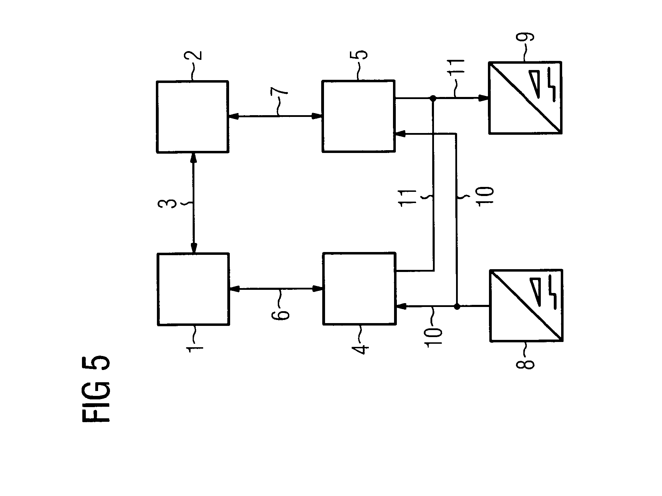

Dazu wird zunächst auf Figur 5 verwiesen, in welcher ein an sich bekanntes redundantes Automatisierungsgerät dargestellt ist. Das redundante Automatisierungsgerät ist gemäß einem 1-von-2-Prinzip aufgebaut und umfasst eine erste Redundanzeinheit mit einem ersten Steuerrechner 1 und der Peripherieeinheit 4 und eine zweite Redundanzeinheit mit einem zweiten Steuerrechner 2 sowie einer Peripherieeinheit 5. Sensoren 8, z. B. so genannte Zweileiter-Messumformer, erfassen Prozesssignale eines zu steuernden technischen Prozesses, welche von den Peripherieeinheiten 4, 5 über Leitungen 10 eingelesen und über geeignete serielle oder parallele Busse 6, 7 den Steuerrechnern 1, 2 in Form von digitalen Signalen übermittelt werden. Die Steuerrechner 1, 2 verarbeiten diese Signale zu entsprechenden Steuersignalen für Aktoren 20, wobei nur eine der Redundanzeinheiten diese Steuersignale den Aktoren 20 über eine Leitung 11 übermittelt. Die Redundanzeinheiten arbeiten nach einem Master-Reserve-Betrieb, was bedeutet, dass nur eine Redundanzeinheit aktiv ist, die andere dagegen passiv geschaltet ist. Nur die aktive Redundanzeinheit steuert die Aktoren 20 über ihre Peripherieeinheit an, die andere Redundanzeinheit übermittelt ihrer Peripherieeinheit lediglich ein Nullsignal. Zum Austausch von Informationen, z. B. in Form von Status- und Abgleichinformationen, ist eine Redundanzkopplung 3 vorgesehen, über welche die Redundanzeinheiten miteinander verbunden sind. Für den Fall, dass die aktive Redundanzeinheit nicht störungsfrei arbeitet, zeigt die aktive Redundanzeinheit über die Redundanzkopplung 3 der passiven Redundanzeinheit die Störung an, wodurch die gerade passive Redundanzeinheit in die aktive Betriebsart wechselt, d. h., diese Redundanzeinheit wird aktiv geschaltet und übernimmt den Master-Betrieb, dagegen wird die gerade aktive Redundanzeinheit passiv geschaltet und wechselt in den Reserve-Betrieb. Ein Wechsel der Masterschaft muss in der Art und Weise erfolgen, dass den Aktoren die Steuersignale im Wesentlichen kontinuierlich und möglichst ohne Signaleinbrüche übermittelt werden. Darüber hinaus ist sicherzustellen, dass während eines reparaturbedingten Austausches einer Peripherieeinheit 4, 5 eine kontinuierliche Messung der Prozesssignale gewährleistet ist. Ein durch einen Zweileiter-Messumformer den Peripherieeinheiten 4, 5 eingeprägter Messstrom, der abhängig ist von einer zu erfassenden Größe, z. B. eine Größe in Form einer Temperatur oder eines Druckes, muss z. B. für den Fall, dass die Peripherieeinheit 4 ausgefallen ist, von der Peripherieeinheit 5 erfasst werden, um eine störungsfreie Prozesssteuerung zu bewirken.

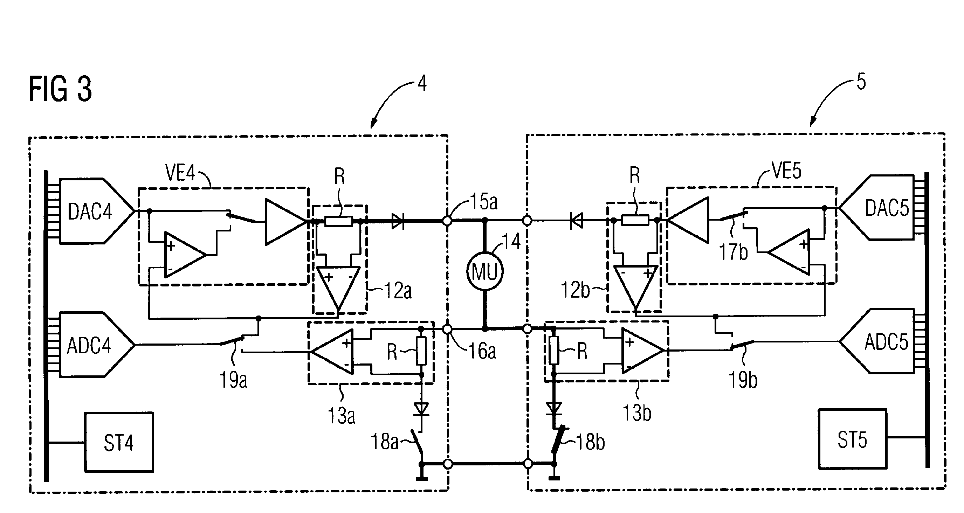

In diesem Zusammenhang wird auf Figur 3 verwiesen, in welcher eine Verschaltung von zwei redundanten Peripherieeinheiten dargestellt ist.

Es ist zunächst angenommen, dass die redundant aufgebauten Peripherieeinheiten 4, 5 derart parametriert bzw. eingestellt sind, dass diese Einheiten für eine Analogeingabe (Einlesen von Sensorsignalen) vorgesehen sind.

Die Funktions- und Wirkungsweise der Peripherieeinheit 5 entspricht der in den Figuren 1 und 2 beschriebenen Funktions-und Wirkungsweise der Peripherieeinheit 4, wobei die Teile der Peripherieeinheit 4 mit den Bezugszeichen ST4, VE4, 12a, 13a ... den Teilen der Peripherieeinheit 5 mit den Bezugszeichen ST5, VE5, 12b, 13b ... entsprechen.

Im vorliegenden Beispiel ist eine erste redundante Betriebsart der als Analogeingaben betriebenen Peripherieeinheiten 4, 5 gezeigt. Dabei ist die Versorgungseinheit VE4 durch die Steuereinheit ST4 angesteuert, der zweite Schalter 18b der Peripherieeinheit 5 ist geschlossen, dagegen wird die Versorgungseinheit VE5 nicht angesteuert und der zweite Schalter 18a der Peripherieeinheit 5 ist geöffnet. Der Messstrom wird in diesem Fall durch den ersten Messkreis 12a der Peripherieeinheit 4 und durch den zweiten Messkreis 13b der Peripherieeinheit 5 erfasst (der Messstromfluss ist durch eine dick gezeichnete Linie dargestellt), wobei geeignete Operationsverstärker dieser Messkreise 12a, 13b den durch den Messstrom am Messwiderstand R verursachten Spannungsabfall messen und einen dazu entsprechenden Strom über die steuerbaren Schalter 19a, 19b den Analog-Digital-Wandlern ADC4, ADC5 übermitteln, welche einen diesem Messstrom entsprechenden Digitalwert den Steuereinheiten VE4, VE5 zuführen.

Eine weitere redundante Betriebsart der als Analogeingabe geschalteten Peripherieeinheiten 4, 5 kann dadurch bewirkt werden, dass die Versorgungseinheit VE5 der Peripherieeinheit 5 angesteuert und der zweite Schalter 18a der Peripherieeinheit 4 geschlossen ist, dagegen ist der zweite Schalter 18b der Peripherieeinheit 5 geöffnet und die Versorgungseinheit VE4 der Peripherieeinheit 4 nicht angesteuert. Der Messstrom wird in diesem Fall durch den ersten Messkreis 12b der Peripherieeinheit 5 und durch den zweiten Messkreis 13b der Peripherieeinheit 4 erfasst, wobei die steuerbaren Schalter 19a, 19b entsprechend geschaltet werden, um den in den Messkreisen 12b, 13a erfassten Messstrom den Analog-Digital-Wandlern ADC4, ADC5 zu übermitteln.

Für den Fall, dass z. B. die Peripherieeinheit 4 gestört ist und aus dem Steuersystem entfernt werden muss, wird die Peripherieeinheit 5 in die nichtredundante Betriebsart geschaltet. In diesem Fall wird die Versorgungseinheit VE5 durch die Steuereinheit ST5 angesteuert und der Schalter 18b geschlossen, wodurch der Messstrom über den Widerstand R des ersten und zweiten Messkreises 12b, 13b der Peripherieeinheit 5 fließt. Dagegen arbeitet die Peripherieeinheit 4 im nichtredundanten Betrieb, falls die Peripherieeinheit 5 aus dem Steuersystem entfernt wird. Die Versorgungseinheit VE4 der Peripherieeinheit 4 wird aktiviert und Schalter 18a in diesem Fall geschlossen, wodurch der Messstrom über den Widerstand R des ersten und zweiten Messkreises 12a, 13a der Peripherieeinheit 4 fließt.

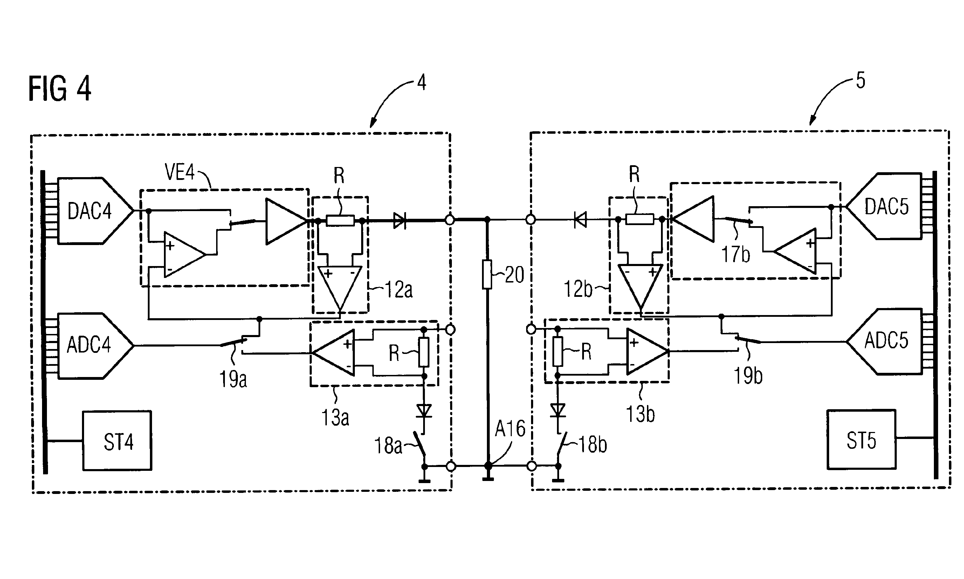

Im Folgenden ist nun angenommen, dass die redundant aufgebauten Peripherieeinheiten 4, 5 derart parametriert bzw. eingestellt sind, dass diese Einheiten für eine Analogausgabe (Ausgeben von Aktorsignalen) vorgesehen sind. Dazu wird auf Figur 4 verwiesen, in welcher eine weitere Verschaltung der Peripherieeinheiten 4, 5 dargestellt ist.
Aufgrund der Einstellung der Peripherieeinheiten 4, 5 als Analogausgabe ist dem Aktor 20 durch die Peripherieeinheiten 4, 5 ein einem Prozess-Ausgangssignal entsprechender Ausgangsstrom einprägbar. In Abhängigkeit eines Steuersignals werden die Peripherieeinheiten 4, 5 in den redundanten Betrieb geschaltet. Dabei ist die Versorgungseinheit VE4 der Peripherieeinheit 4 im Hinblick auf die Ausgabe eines Konstantstroms aktivierbar und der Strom über den ersten Messkreis 12a an den ersten Anschluss 15a, 15b des Aktors 20 schaltbar, dessen zweiter Anschluss A16 an das Massepotential M angeschlossen ist. Z. B. bewirkt ein High-Pegel dieses Steuersignals, dass
- die Versorgungseinheit VE4 der Peripherieeinheit 4 aktiviert und
- die Versorgungseinheit VE5 der Peripherieeinheit deaktiviert ist,
wodurch der Ausgangsstrom über den ersten Messkreis 12a der Peripherieeinheit 4 und den Aktor 20 zum Massepotential fließt.

Ein Low-Pegel dieses Steuersignals bewirkt dagegen, dass
- die Versorgungseinheit VE4 der Peripherieeinheit 4 deaktiviert und
- die Versorgungseinheit VE5 der Peripherieeinheit aktiviert ist,
wodurch der Ausgangsstrom über den ersten Messkreis 12b der Peripherieeinheit 5 und den Aktor 20 zum Massepotential fließt.

Für den Fall, dass z. B. die Peripherieeinheit 5 gestört ist und aus dem Automatisierungssystem entfernt werden muss, wird die Peripherieeinheit 4 in die nichtredundante Betriebsart geschaltet. In diesem Fall wird die Versorgungseinheit VE4 aktiviert, wodurch der Ausgangsstrom über den Widerstand R des ersten Messkreises 12a der Peripherieeinheit 4 und den Aktor 20 zum Massepotential M fließt. Dagegen arbeitet die Peripherieeinheit 5 im nichtredundanten Betrieb, falls die Peripherieeinheit 4 aus dem Steuersystem entfernt wird. Die Versorgungseinheit VE5 wird in diesem Fall aktiviert, wodurch der Ausgangsstrom über den Widerstand R des ersten Messkreises 12b der Peripherieeinheit 5 und den Aktor 20 zum Massepotential M fließt.

## Patentansprüche

1. Peripherieeinheit für ein Automatisierungsgerät, mit einer Steuereinheit (ST4, ST5), durch die eine Versorgungseinheit (VE4, VE5) in eine erste und eine zweite Einstellung schaltbar ist, wobei
- in der ersten Einstellung ein Digital-Analog-Wandler (DAC4, DAC5) durch die Steuereinheit (ST4, ST5) mit einem konstanten Wert ansteuerbar ist, wodurch ein an einem ersten Anschluss (15a, 15b) der Peripherieeinheit (4, 5) anschließbarer Messumformer (14) mit einer konstanten Spannung beaufschlagt wird,
- in der zweiten Einstellung der Digital-Analog-Wandler (DAC4, DAC5) durch die Steuereinheit (ST4, ST5) mit einem auszugebenden Prozess-Ausgangssignal entsprechenden Wert ansteuerbar ist, das einem an den ersten Anschluss (15a, 15b) der Peripherieeinheit (4, 5) anschließbaren Aktor (20) zugeführt wird,
- in der ersten Einstellung einem Analog-Digital-Wandler (ADC4, ADC5) ein durch den Messumformer (14) eingeprägter Strom zuführbar ist, welchen der Analog-Digital-Wandler (ADC4, ADC5) der Steuereinheit (ST4, ST5) in Form eines dem eingeprägten Strom entsprechenden Prozess-Eingangssignals zuführt, wobei
- in einer redundanten Betriebsart ein erster oder ein zweiter Messkreis (12a, 13a, 12b, 13b) den eingeprägten Strom erfasst,
- in einer nichtredundanten Betriebsart der erste und der zweite Messkreis (12a, 13a, 12b, 13b) den eingeprägten Strom erfassen.

2. Peripherieeinheit nach Anspruch 1, **dadurch gekennzeichnet, dass** die erste und zweite Einstellung der Steuereinheit (ST4, ST5) durch einen Anwender menügesteuert einstellbar ist.

3. Peripherieeinheit nach Anspruch 1 oder 2, **dadurch gekennzeichnet, dass** in der zweiten Einstellung dem Analog-Digital-Wandler (ADC4, ADC5) der dem auszugebenden Prozess-Ausgangssignal entsprechende Wert rückgeführt wird.

4. Redundantes Automatisierungsgerät mit Peripherieeinheiten nach einem der Ansprüche 1 bis 3, wobei
- jeweils an den ersten Anschluss (15a, 15b) der Peripherieeinheiten (4, 5) ein erster Anschluss eines Aktors (20) oder eines Messumformers (14) anschließbar ist,
- ein zweiter Anschluss des Aktors (20) jeweils an einen mit einem Massepotential versehenen weiteren Anschluss der Peripherieeinheiten (4, 5) anschließbar ist,
- ein zweiter Anschluss des Messumformers jeweils über den zweiten Messkreis (13a, 13b) an den weiteren Anschluss der Peripherieeinheiten (4, 5) anschließbar ist.

## Claims

1. Peripheral unit for an automation device, having a control unit (ST4, ST5) by which a supply unit (VE4, VE5) can be switched to a first and to a second setting, wherein
- in the first setting a digital-to-analogue converter (DAC4, DAC5) can be controlled by the control unit (ST4, ST5) at a constant value, as a result of which a constant voltage is applied to a measuring transducer (14) that can be connected to a first terminal (15a, 15b) of the peripheral unit (4, 5),
- in the second setting the digital-to-analogue converter (DAC4, DAC5) can be controlled by the control unit (ST4, ST5) at a value corresponding to a process output signal requiring to be fed out that is routed to an actuator (20) that can be connected to the first terminal (15a, 15b) of the peripheral unit (4, 5),
- in the first setting a current applied by the measuring transducer (14) can be routed to an analogue-to-digital converter (ADC4, ADC5), which current the analogue-to-digital converter (ADC4, ADC5) routes to the control unit (ST4, ST5) in the form of a process input signal corresponding to the applied current, wherein
- in a redundant operating mode a first or a second measuring circuit (12a, 13a, 12b, 13b) registers the applied current,
- in a non-redundant operating mode the first and the second measuring circuit (12a, 13a, 12b, 13b) registers the applied current.

2. Peripheral unit according to claim 1, **characterized in that** the first and second setting of the control unit (ST4, ST5) can be set by a user aided by menu prompting.

3. Peripheral unit according to claim 1 or 2, **characterized in that** in the second setting the value corresponding to the process output signal requiring to be fed out is routed back to the analogue-to-digital converter (ADC4, ADC5).

4. Redundant automation device having peripheral units according to one of claims 1 to 3, wherein
- a first terminal of an actuator (20) or of a measuring transducer (14) can be connected in each case to the first terminal (15a, 15b) of the peripheral units (4, 5),
- a second terminal of the actuator (20) can be connected in each case to one further terminal of the peripheral units (4, 5) that is provided with a frame potential,
- a second terminal of the measuring transducer can be connected in each case via the second measuring circuit (13a, 13b) to the further terminal of the peripheral units (4, 5).

## Revendications

1. Unité périphérique pour un appareil d'automatisation, comprenant une unité ( ST4, ST5 ) de commande par laquelle une unité ( VE4, VE5 ) d'alimentation peut être commutée dans une première et dans une deuxième position, dans laquelle
- dans la première position, un convertisseur ( DAC4, DAC5 ) numérique-analogique peut être commandé par l'unité ( ST4, ST5 ) de commande avec une valeur constante de sorte qu'un convertisseur ( 14 ) de mesure pouvant être raccordé à une première borne ( 15a, 15b ) de l'unité ( 4, 5 ) périphérique est alimenté à une tension constante,
- dans la deuxième position du convertisseur ( DAC4, DAC5 ) numérique-analogique, il peut être commandé par une unité ( ST4, ST5 ) de commande avec une valeur correspondant à un signal de sortie de processus à émettre, valeur qui est envoyée à un actionneur ( 20 ) pouvant être raccordé à la première borne ( 15a, 15b ) de l'unité ( 4, 5 ) périphérique,
- dans la première position, il peut être envoyé à un convertisseur ( ADC4, ADC5 )analogique-numérique un courant injecté par le convertisseur ( 14 ) de mesure, courant que le convertisseur ( ADC4, ADC5 ) analogique-numérique envoie à l'unité ( ST4, ST5 ) de commande sous la forme d'un signal d'entrée de processus correspondant au courant injecté, dans laquelle
- dans un type de fonctionnement redondant, un premier ou un deuxième circuit ( 12a, 13a, 12b, 13b ) de mesure détecte le courant injecté,
- dans un type de fonctionnement non redondant, le premier et le deuxième circuit ( 12a, 12b, 13a, 13b ) de mesure détecte le courant injecté.

2. Unité périphérique suivant la revendication 1, **caractérisée en ce que** la première et la deuxième position ( ST4, ST5 ) de commande peuvent être réglées par l'utilisateur suivant un menu.

3. Unité périphérique suivant la revendication 1 ou 2, **caractérisée en ce que** dans la deuxième position, il est retourné au convertisseur ( ADC4, ADC5 ) analogique-numérique la valeur correspondant au signal de sortie de processus à émettre.

4. Appareil d'automatisation redondant ayant des unités périphériques suivant l'une des revendications 1 à 3, dans lequel
- respectivement à la première borne ( 15a, 15b, ) des unités ( 4, 5 ) périphériques peut être raccordée une première bande d'un actionneur ( 20 ) ou d'un convertisseur ( 14 ) de mesure,
- une deuxième borne de l'actionneur ( 20 ) peut être raccordée respectivement à une autre borne, munie d'un potentiel de masse, des unités ( 4, 5 ) périphériques,
- une deuxième borne du convertisseur de mesure peut être raccordée respectivement par le deuxième circuit ( 13a, 13b ) de mesure à l'autre borne des unités ( 4, 5 ) périphériques.
